# EUROPEAN PATENT APPLICATION

(11) **EP 3 855 216 A1**
(43) Date of publication of application: **28.07.2021**
(21) Application number: 19861916.5
(22) Date of filing: 20.08.2019
(51) Int. Cl.: G01S 19/48, G01C 21/28, G01S 19/43, G01S 19/52, G01S 19/53

(54) **NAVIGATION DEVICE AND METHOD AND PROGRAM FOR GENERATING NAVIGATION ASSISTANCE INFORMATION**

(30) Priority: 21.09.2018 JP 2018176737
(71) Applicant: FURUNO ELECTRIC CO., LTD., Nishinomiya-City Hyogo 662-8580 (JP)
(72) Inventor: TODA, Hiroyuki, Nishinomiya-City, Hyogo 662-8580 (JP); NAKAMURA, Hiraku, Nishinomiya-City, Hyogo 662-8580 (JP); SONOBE, Tatsuya, Nishinomiya-City, Hyogo 662-8580 (JP); FUJISAWA, Naomi, Nishinomiya-City, Hyogo 662-8580 (JP)
(74) Representative: Müller Hoffmann & Partner
(86) International application number: PCT/JP2019/032415
(87) International publication number: WO 2020/059383

(57) **Abstract**

An absolute spatial relationship between a device and other characteristic points etc. can be calculated with high precision by using VSLAM. A navigation device includes a GNSS calculating part, a VSLAM calculating part, and a correcting information estimating part. The GNSS calculating part calculates a GNSS speed and a GNSS attitude angle based on one of an amount of change in a phase of a GNSS signal transmitted from a positioning satellite and an amount of change in a frequency of the GNSS signal. The VSLAM calculating part performs a VSLAM calculation by using a video to estimate VSLAM positions and VSLAM attitude angles at a plurality of time points. The correcting information estimating part estimates, based on the GNSS speed, the GNSS attitude angle, the VSLAM positions at the plurality of time points, and the VSLAM attitude angles at the plurality of time points, one of a scale and a scale error of the VSLAM position with respect to a position in an absolute coordinate system, or one of an error of the GNSS speed and an error of the GNSS position obtained from the GNSS speed.

## Description

### TECHNICAL FIELD

The present disclosure relates to a navigation device utilizing VSLAM (Visual Simultaneous Localization and Mapping) technology.

### BACKGROUND ART

Currently, VSLAM (Visual Simultaneous Localization and Mapping) technology is utilized in various fields.

VSLAM is to estimate spatial information around a device thereof, such as characteristic points, by using a video acquired by a monocular camera, and, for example, map the characteristic points. In addition, VSLAM calculates a relative position etc. of the device based on the spatial information and the mapping result.

### [Reference Documents of Conventional Art]

### [Nonpatent Documents]

[Nonpatent Document 1] Georg Klein, David Murray, "Parallel Tracking and Mapping for Small AR Workspace," Active Vision Laboratory Department of Engineering Science, University of Oxford
[Nonpatent Document 2] Takafumi Taketomi, Hideaki Uchiyama and Sei Ikeda, "Visual-SLAM Algorithms: a Survey from 2010 to 2016"

### DESCRIPTION OF THE DISCLOSURE

### [Problem to be Solved by the Disclosure]

However, although VSLAM is capable of calculating the relative spatial relationship between the device and other characteristic points, the absolute spatial relationship is uncertain.

Therefore, one purpose of the present disclosure is to provide a technology of calculating an absolute spatial relationship between a device and other characteristic points etc. with high precision by using VSLAM.

### [Summary of the Disclosure]

A navigation device of the present disclosure includes a GNSS calculating part, a VSLAM calculating part, and a correcting information estimating part. The GNSS calculating part calculates a GNSS speed and a GNSS attitude angle based on one of an amount of change in a phase of a GNSS signal transmitted from a positioning satellite and an amount of change in a frequency of the GNSS signal. The VSLAM calculating part performs a VSLAM calculation by using a video to estimate VSLAM positions and VSLAM attitude angles at a plurality of time points. The correcting information estimating part estimates, based on the GNSS speed, the GNSS attitude angle, the VSLAM positions at the plurality of time points, and the VSLAM attitude angles at the plurality of time points, one of a scale and a scale error of the VSLAM position with respect to a position in an absolute coordinate system, or one of an error of the GNSS speed and an error of the GNSS position obtained from the GNSS speed.

According to this configuration, the scale or the scale error of the VSLAM position, and the error of the device position can be corrected with high precision.

### [Effect of the Disclosure]

According to the present disclosure, an absolute spatial relationship between a device and other characteristic points etc. can be calculated with high precision by using VSLAM.

### BRIEF DESCRIPTION OF DRAWINGS

Fig. 1 is a functional block diagram illustrating a configuration of a calculating part of a navigation device according to a first embodiment of the present disclosure.
Fig. 2 is a functional block diagram illustrating a configuration of the navigation device according to the first embodiment of the present disclosure.
Fig. 3 is a functional block diagram illustrating a configuration of a correcting information estimating part according to the first embodiment of the present disclosure.
Fig. 4 is a graph illustrating a transition of an error of a GNSS speed and the GNSS position.
Fig. 5 is a view illustrating a concept of correction of spatial information and a GNSS position according to the first embodiment of the present disclosure.
Fig. 6 is a flowchart illustrating a process flow of a method of generating navigation support information.
Fig. 7 is a functional block diagram illustrating a configuration of a navigation device according to a second embodiment of the present disclosure.
Fig. 8 is a functional block diagram illustrating a configuration of a calculating part according to the second embodiment of the present disclosure.
Fig. 9 is a functional block diagram illustrating a configuration of a navigation device according to a third embodiment of the present disclosure.
Fig. 10 is a functional block diagram illustrating a configuration of a calculating part according to the third embodiment of the present disclosure.
Figs. 11(A) and 11(B) are views illustrating examples of a navigation support image displayed on the navigation device according to the third embodiment.
Fig. 12 is a flowchart illustrating a process flow of a method of generating the navigation support information.

### MODES FOR CARRYING OUT THE DISCLOSURE

A navigation device, a navigation support method, and a navigation support program according to a first embodiment of the present disclosure will be described with reference to the drawings. Note that, below, although a ship is used as a movable body, the configuration of the present disclosure is also applicable to other water-surface and underwater movable bodies, land movable bodies, and air movable bodies.

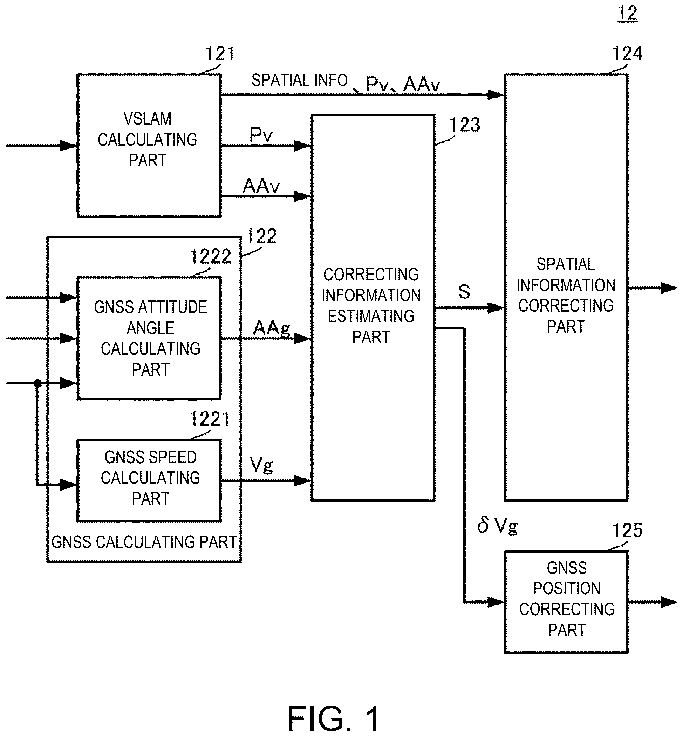

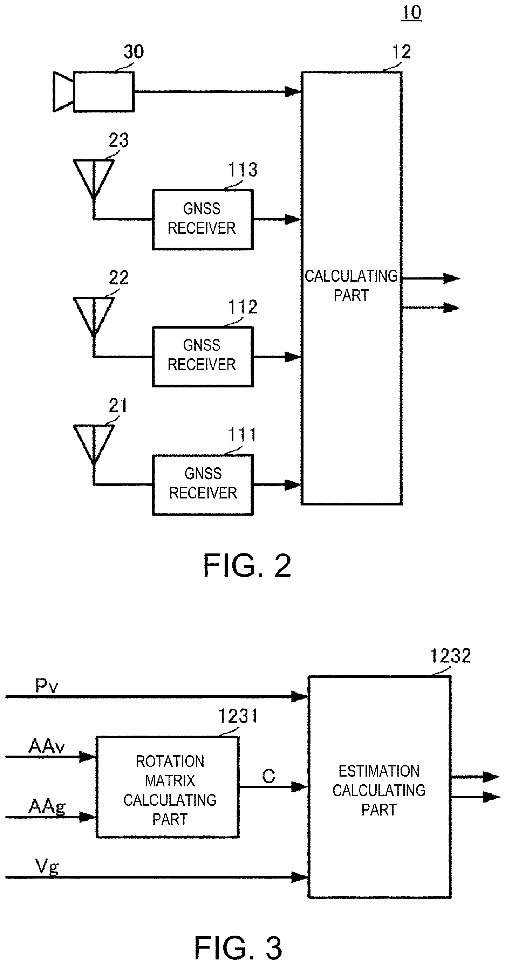

Fig. 1 is a functional block diagram illustrating a configuration of a calculating part of the navigation device according to the first embodiment of the present disclosure. Fig. 2 is a functional block diagram illustrating a configuration of the navigation device according to the first embodiment of the present disclosure. Fig. 3 is a functional block diagram illustrating a configuration of a correcting information estimating part according to the first embodiment of the present disclosure.

### (Outline of Navigation Device 10)

As illustrated in Fig. 2, the navigation device 10 includes a GNSS receiver 111, a GNSS receiver 112, a GNSS receiver 113, a calculating part 12, a GNSS antenna 21, a GNSS antenna 22, a GNSS antenna 23, and a camera 30. Note that the navigation device 10 may be at least provided with the calculating part 12.

The GNSS antenna 21, the GNSS antenna 22, and the GNSS antenna 23 are installed on the ship (not illustrated) to which the navigation device 10 is mounted. The GNSS antenna 21, the GNSS antenna 22, and the GNSS antenna 23 are installed in a so-called "open-sky environment." The GNSS antenna 21, the GNSS antenna 22, and the GNSS antenna 23 are disposed so as not to be simultaneously lined up on a straight line. That is, for example, the GNSS antenna 23 is not disposed on a straight line connecting the GNSS antenna 21 and the GNSS antenna 22.

The GNSS antenna 21 receives GNSS signals from GNSS satellites (not illustrated) and outputs them to the GNSS receiver 111. The GNSS antenna 22 receives GNSS signals from the GNSS satellites (not illustrated) and outputs them to the GNSS receiver 112. The GNSS antenna 23 receives GNSS signals from the GNSS satellites (not illustrated) and outputs them to the GNSS receiver 113.

The GNSS signal is a signal in which a PRN (pseudo-random noise) code and navigation message data are superimposed on a carrier wave signal at a given frequency. The PRN code is a code for identifying a positioning satellite which is a sender of this code. The navigation message data is data containing orbital information, correcting information, etc. on the positioning satellite.

The GNSS receiver 111, the GNSS receiver 112, and the GNSS receiver 113 are each composed of a memory which stores a program of acquisition and tracking processing for the GNSS signal, and a logic element, such as an IC, which executes the program. The GNSS receiver 111, the GNSS receiver 112, and the GNSS receiver 113 acquire and track the acquired GNSS signal by a known method. Here, the GNSS receiver 111, the GNSS receiver 112, and the GNSS receiver 113 perform acquisition and tracking of the code and the carrier wave signal (carrier signal).

The GNSS receiver 111, the GNSS receiver 112, and the GNSS receiver 113 acquire observation data by the acquisition and tracking, and output it to the calculating part 12. The observation data contains at least an integrated value or accumulated δ range (ADR) of a carrier wave phase. The GNSS receiver 111, the GNSS receiver 112, and the GNSS receiver 113 sequentially perform the acquisition of the integrated value of the carrier wave phase at a given interval, while synchronizing with the time of the GNSS (for example, every epoch). Note that the GNSS receiver 111, the GNSS receiver 112, and the GNSS receiver 113 may output a Doppler frequency of the carrier wave signal, a code phase, a pseudo range calculated based on the code phase, a positioned location, etc. to the calculating part 12 as the observation data.

The camera 30 is a monocular camera, for example. The camera 30 images the periphery of the ship to which the navigation device 10 is mounted, and generates a video. The camera 30 outputs the video to the calculating part 12.

The calculating part 12 uses the observation data from the GNSS receiver 111, the GNSS receiver 112, and the GNSS receiver 113, and the video from the camera 30 to estimate a scale error of a VSLAM position to a position in an absolute coordinate system, and an error of a GNSS speed, or an error of a GNSS position obtained from the GNSS speed. Moreover, the calculating part 12 corrects spatial information acquired from the video by using a scale corrected by the scale error. Moreover, the calculating part 12 corrects a position of the navigation device 10 (the device position) by using the error of the GNSS speed or the error of the GNSS position.

### (Concrete Configuration and Processing of Calculating Part 12)

The calculating part 12 is composed of a memory which stores a program for processings, such as a VSLAM calculation (described later), a calculation of a GNSS calculation value, an estimation of the scale error, an estimation of the error of the device position, a correction of the spatial information, and a correction of the device position, and a logic element, such as a CPU, which executes the program.

As illustrated by a functional block in Fig. 1, the calculating part 12 includes a VSLAM calculating part 121, a GNSS calculating part 122, a correcting information estimating part 123, a spatial information correcting part 124, and a GNSS position correcting part 125. Note that the calculating part 12 may be at least provided with the VSLAM calculating part 121, the GNSS calculating part 122, and the correcting information estimating part 123.

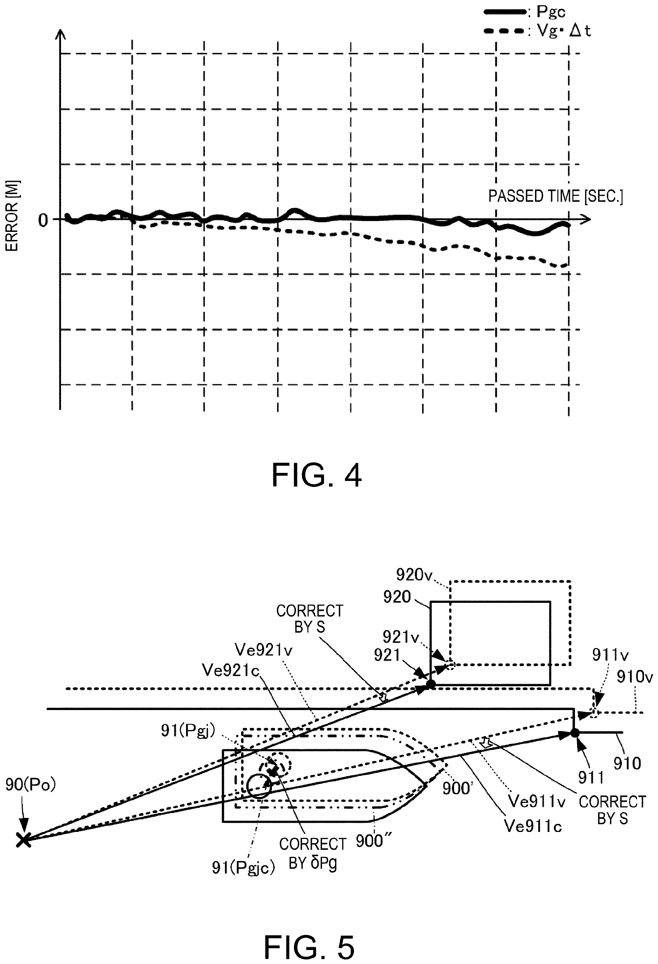

The VSLAM calculating part 121 estimates the position of the device with respect to a reference point (see "90 (coordinates Po)" of Fig. 5) (VSLAM position), and the spatial information of each characteristic point, by a known method using the acquired video. Here, the VSLAM calculating part 121 estimates the device position (VSLAM position) with respect to the reference point, and the spatial information of each characteristic point, while synchronizing with the GNSS time. That is, the VSLAM calculating part 121 estimates a VSLAM position Pv which is the device position with respect to the reference point, a VSLAM attitude angle AAv of the device, and the spatial information of each characteristic point, while synchronizing with the acquisition time of the integrated value of the carrier wave phase, for every acquisition time of the video. For example, the VSLAM calculating part 121 estimates the VSLAM position Pv, the VSLAM attitude angle AAv, and the spatial information of each characteristic point, while synchronizing with the calculation time of a GNSS speed (described below). Note that spatial information can be expressed by a spatial vector of the characteristic point on the basis of the reference point of the VSLAM calculation.

The VSLAM calculating part 121 outputs the VSLAM position Pv and the VSLAM attitude angle AAv to the correcting information estimating part 123 and the spatial information correcting part 124. Moreover, the VSLAM calculating part 121 outputs the spatial information to the spatial information correcting part 124. Here, the VSLAM calculating part 121 associates the VSLAM position Pv, the VSLAM attitude angle AAv, and the spatial information with an estimated time, and outputs it.

The GNSS calculating part 122 includes a GNSS speed calculating part 1221 and a GNSS attitude angle calculating part 1222.

The GNSS speed calculating part 1221 calculates a GNSS speed Vg by using amounts of change in the integrated value of the carrier wave phase acquired by the GNSS receiver 111, the GNSS receiver 112, or the GNSS receiver 113. Here, the GNSS speed calculating part 1221 calculates the GNSS speed Vg at a given interval synchronizing with the GNSS time. By using the amounts of change in the integrated value of the carrier wave phase, the GNSS speed calculating part 1221 can calculate the GNSS speed Vg at high speed and with high precision. That is, the GNSS speed calculating part 1221 can calculate the GNSS speed Vg at high speed and with high precision, without determining the integral value bias and acquiring the correcting information from an external device.

The GNSS speed calculating part 1221 outputs the GNSS speed Vg to the correcting information estimating part 123. The GNSS speed calculating part 1221 associates the GNSS speed Vg with the calculation time, and outputs it.

The GNSS attitude angle calculating part 1222 calculates a GNSS attitude angle AAg based on the integrated values of the carrier wave phase acquired by the GNSS receiver 111, the GNSS receiver 112, and the GNSS receiver 113, by a known method (for example, a method using base line vectors between the GNSS antennas). By using the integrated values of the carrier wave phase, the GNSS attitude angle AAg can be calculated with high precision.

The GNSS attitude angle calculating part 1222 outputs the GNSS attitude angle AAg to the correcting information estimating part 123. Here, the GNSS attitude angle calculating part 1222 associates the GNSS attitude angle AAg with the calculation time, and outputs it.

The correcting information estimating part 123 calculates a scale S. The correcting information estimating part 123 estimates a scale error δS and an error δVg of the GNSS speed Vg, by using the VSLAM position Pv, the VSLAM attitude angle AAv, the GNSS speed Vg, and the GNSS attitude angle AAg. Note that the correcting information estimating part 123 may estimate an error δPg of the GNSS position Pg, instead of the error δVg of the GNSS speed Vg. The GNSS position Pg is obtained, for example, by integrating the GNSS speed Vg, while using the coordinates of the reference point as the origin.

The correcting information estimating part 123 corrects the scale S by using the scale error δS, and outputs the corrected scale S to the spatial information correcting part 124. Moreover, the correcting information estimating part 123 outputs the error δVg of the GNSS speed Vg or the error δPg of the GNSS position Pg to the GNSS position correcting part 125. Note that, although in this description the scale error δS is estimated, the scale S may be estimated instead.

### (Concrete Configuration and Processing of Correcting Information Estimating Part 123)

As illustrated in Fig. 3, the correcting information estimating part 123 includes a rotation matrix calculating part 1231 and an estimation calculating part 1232.

The rotation matrix calculating part 1231 calculates a rotation matrix C for performing a conversion between a VSLAM coordinate system and a GNSS coordinate system by using the VSLAM attitude angle AAv and the GNSS attitude angle AAg. The rotation matrix calculating part 1231 outputs the rotation matrix C to the estimation calculating part 1232.

The estimation calculating part 1232 calculates the scale S, and estimates the scale error δS, and the error δVg of the GNSS speed Vg or the error δPg of the GNSS position Pg.

### (Calculation of Scale S)

The estimation calculating part 1232 calculates a GNSS distance Dgij by integrating the GNSS speed Vg. The correcting information estimating part 123 calculates a VSLAM distance Dvij by using an amount of change in the VSLAM position Pv within a time same as the calculation target time of the GNSS distance Dgij.

The estimation calculating part 1232 calculates the scale S by dividing an absolute value ABS(Dgij) of the GNSS distance Dgij by an absolute value ABS(Dvij) of the VSLAM distance Dvij. That is, the estimation calculating part 1232 calculates the scale S by calculating S=ABS(Dgij)/ABS(Dvij).

### (Estimation of Scale Error δS and Error δVg of GNSS Speed Vg)

The estimation calculating part 1232 sets up a system equation where the scale error δS and the error δVg of the GNSS speed Vg are state variables. Moreover, the estimation calculating part 1232 sets up an observation equation including the rotation matrix C in a conversion matrix, where the scale error δS and the error δVg of the GNSS speed Vg are the state variables, and the VSLAM position Pv and the GNSS speed Vg as the observation values.

The estimation calculating part 1232 performs a Kalman-filter processing by using the system equation and the observation equation. Therefore, the estimation calculating part 1232 estimates the scale error δS and the error δVg of the GNSS speed Vg.

By applying such filtering, the estimation calculating part 1232 can estimate the scale error δS and the error δVg of the GNSS speed Vg with high precision.

### (Estimation of Scale Error δS and Error δPg of GNSS Position Pg)

The estimation calculating part 1232 sets up the system equation where the scale error δS and the error δPg of the GNSS position Pg are the state variables. Moreover, the estimation calculating part 1232 sets up the observation equation including the rotation matrix C in the conversion matrix, where the scale error δS and the error δPg of the GNSS position Pg are the state variables, and the VSLAM position Pv and the GNSS speed Vg as the observation values.

The estimation calculating part 1232 performs the Kalman-filter processing by using the system equation and the observation equation. Therefore, the estimation calculating part 1232 estimates the scale error δS and the error δPg of the GNSS position Pg.

By applying such filtering, the estimation calculating part 1232 can estimate the scale error δS and the error δPg of the GNSS position Pg with high precision.

Note that, although in this description the scale error δS is estimated, the scale S may be estimated. In this case, the system equation and the observation equation may be set up by using the scale S as the state variable, instead of the scale error δS.

### (Processing of Spatial Information Correcting Part 124 and GNSS Position Correcting Part 125)

The spatial information correcting part 124 corrects the spatial information by using the scale S. Here, the scale S is corrected with high precision by the scale error δS being estimated with high precision. Therefore, the spatial information correcting part 124 can correct the spatial information with high precision.

The GNSS position correcting part 125 calculates the GNSS position Pg by integrating the GNSS speed Vg. Here, when using the error δVg of the GNSS speed Vg, the GNSS position correcting part 125 calculates and outputs the GNSS position Pg by using a speed Vgc which is obtained by correcting the GNSS speed Vg by using the error δVg. Moreover, when using the error δPg of the GNSS position Pg, the GNSS position correcting part 125 outputs a GNSS position Pgc which is obtained by correcting the GNSS position Pg calculated using the GNSS speed Vg, by using the error δPg. Here, the GNSS position correcting part 125 can correct the GNSS position Pg with high precision by the error δVg of the GNSS speed Vg or the error δPg of the GNSS position Pg being estimated with high precision.

Fig. 4 is a graph illustrating a time transition of an accumulated error of the GNSS speed and the error of the corrected GNSS position. As illustrated in Fig. 4, even if the accumulated error of the GNSS speed Vg increases over time, the error of the corrected GNSS position Pgc is suppressed small.

In addition, since the spatial information becomes highly precise and the corrected GNSS position Pgc becomes highly precise, the spatial relationship between the device position and each characteristic point of the spatial information becomes highly precise. That is, the navigation device 10 can calculate the spatial relationship between the device position and each characteristic point of the spatial information with high precision.

Fig. 5 is a view illustrating a concept of the correction of the spatial information and the GNSS position according to the first embodiment of the present disclosure.

Note that, below, the GNSS antenna 21, the GNSS antenna 22, the GNSS antenna 23, and the camera 30 are described as they are disposed substantially at the same location (observing location) 91 in a coordinate system of a ship 900. In more detail, the geometric centers of the GNSS antenna 21, the GNSS antenna 22, and the GNSS antenna 23, and the camera 30 are disposed at the same location at least in a horizontal surface of a ship body coordinate system.

Moreover, in Fig. 5, in order to facilitate the description, although it is described that the VSLAM position is in agreement with the GNSS position at a first time ti, the following processing can be achieved without limiting to this configuration.

For example, in the example of Fig. 5, the spatial information on a characteristic point 911v of a quaywall 910v according to the VSLAM calculation is a spatial vector Ve911v which has the reference point 90 (coordinates Po) as a starting point and the characteristic point 911v as an ending point. However, the spatial vector Ve911v includes the uncertainty peculiar to the camera 30 as described above as the problem.

The spatial information correcting part 124 calculates a spatial vector Ve911c in the absolute coordinate system by multiplying the spatial vector Ve911v according to the VSLAM calculation by the scale S. That is, the spatial information correcting part 124 calculates Ve911c=S•Ve911v. Here, as described above, the scale S is a value for correcting the error of the VSLAM position with respect to the reference point 90 (coordinates Po) with high precision by using the highly-precise GNSS speed. Moreover, the scale error δS is estimated with high precision by filtering. Therefore, the scale S corrected by the scale error δS becomes higher in the precision. Therefore, the spatial vector Ve911c becomes a vector obtained by correcting the spatial vector Ve911v according to the VSLAM calculation to the highly-precise value equivalent to the absolute coordinate system. Therefore, the navigation device 10 can calculate a spatial vector Ve911v of a characteristic point 911 of a quaywall 910 in the absolute coordinate system with high precision.

Moreover, in the example of Fig. 5, the spatial information on a characteristic point 921v of a building 920v according to the VSLAM calculation is a spatial vector Ve921v which has the reference point 90 (coordinates Po) as a starting point and the characteristic point 921v as an ending point. However, the spatial vector Ve921v includes the uncertainty peculiar to the camera 30 as described above as the problem.

The spatial information correcting part 124 calculates Ve921c=S•Ve 921v by using the scale S. Here, the scale S is a value for correcting the error of the VSLAM position with respect to the reference point 90 (coordinates Po) with high precision by using the highly-precise GNSS speed, as described above. Moreover, the scale error δS is estimated with high precision by the filtering. Therefore, the scale S corrected by the scale error δS becomes higher in the precision. Therefore, the spatial vector Ve921c becomes a vector obtained by correcting the spatial vector Ve921v according to the VSLAM calculation to the highly-precise value equivalent to the absolute coordinate system, and therefore, a spatial vector Ve921v of a characteristic point 921 of a building 920 in the absolute coordinate system can be calculated with high precision.

Further, the GNSS position correcting part 125 corrects a GNSS position Pgj of the device 91 (in more detail, for example, the geometric center of the GNSS antenna 21, the GNSS antenna 22, and the GNSS antenna 23) at a second time tj, by using the error δPg of the GNSS position Pg. Since the error δPg of the GNSS position Pg is estimated with high precision by the filtering, the corrected GNSS position Pgjc becomes the highly-precise value.

Thus, since the positions of the characteristic point 911 and a characteristic point 921 are calculated with high precision, and the position of the device 91 is calculated with high precision, the positions of the device 91 (i.e., the ship 900 to which the navigation device 10 is mounted), and the characteristic point 911 and the characteristic point 921 can be grasped with high precision.

That is, by using the configuration of this embodiment, the navigation device 10 can correct the error of the spatial information using the VSLAM calculation with high precision, and can acquire the spatial information around the ship 900 as a highly-precise value in an actual scale. Moreover, the navigation device 10 can calculate the position of the ship 900 with high precision. Therefore, the navigation device 10 can map with high precision, a spatial relationship between the ship 900 and the characteristic points around the ship 900 (i.e., navigation support information).

Although in the above description the Kalman filter is used, the scale error δS, and the error δVg of the GNSS speed Vg or the error δPg of the GNSS position Pg may be estimated using other equations of a discrete-time stochastic system.

Moreover, the correcting information estimating part 123 may use the GNSS attitude angle AAg and the VSLAM attitude angle AAv to add an error of an angular difference between the VSLAM attitude angle and the GNSS attitude angle AAg (an offset angle of the VSLAM attitude angle) to the state variable to estimate the error of the angular difference.

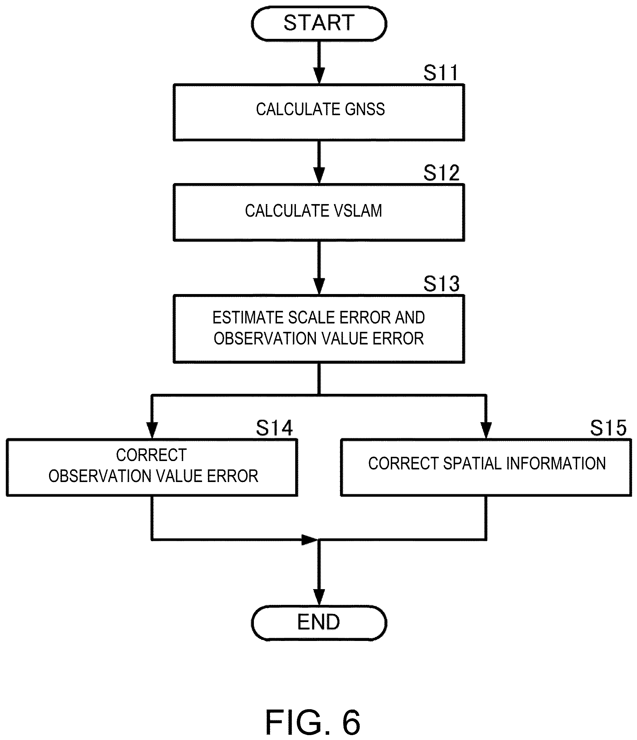

Although in the above description the calculating part 12 is implemented by dividing it into a plurality of functional blocks, it may be implemented by a program which implements the processing illustrated in Fig. 6 and a processing unit which executes the program. Fig. 6 is a flowchart illustrating a process flow of a method of generating the navigation support information. Note that the concrete content of each processing is described above, and therefore, the description thereof is omitted.

The processing unit calculates the GNSS calculation value by using the carrier wave phase in the GNSS signal (S11). The GNSS calculation value includes the GNSS speed Vg and the GNSS attitude angle AAg.

The processing unit performs the VSLAM calculation based on the video inputted from the camera to estimate the VSLAM position, the VSLAM attitude angle, and the spatial information (S12).

The processing unit carries out the calculation of the GNSS calculation value and the estimation of the VSLAM position and the spatial information in a time synchronized fashion. Here, the time synchronization is not limited to performing "simultaneously," but may be achieved by performing the calculation of the GNSS calculation value and the estimation of the VSLAM position and the spatial information, while associating respective time information with the calculation and the estimation, and thereafter, uniting those with the same time information.

The processing unit estimates the scale error δS and the observation value error by filtering (e.g., the Kalman filter) (S13). Here, the observation value error includes the error δVg of the GNSS speed Vg and the error δPg of the GNSS position Pg.

The processing unit corrects the GNSS observation value by using the observation value error (S14), and corrects the spatial information by using the scale S which is corrected by the scale error δS (S15).

Note that, although in Fig. 6 the correction by using the scale error δ and the observation value error is performed sequentially, it may be carried out at a given interval. Moreover, although the method is to estimate the scale error δS here, it may estimate the scale S instead.

Moreover, in the above description, the GNSS position Pg corrected by using the error δPg of the GNSS position Pg may be fed back to the VSLAM calculating part 121. In this case, the VSLAM calculating part 121 applies the corrected GNSS position Pg (i.e., the highly-precise GNSS position Pg) to a restricted condition and estimates the VSLAM position Pv and the VSLAM attitude angle AAv. Therefore, the VSLAM position Pv and the VSLAM attitude angle AAv can be estimated with higher precision.

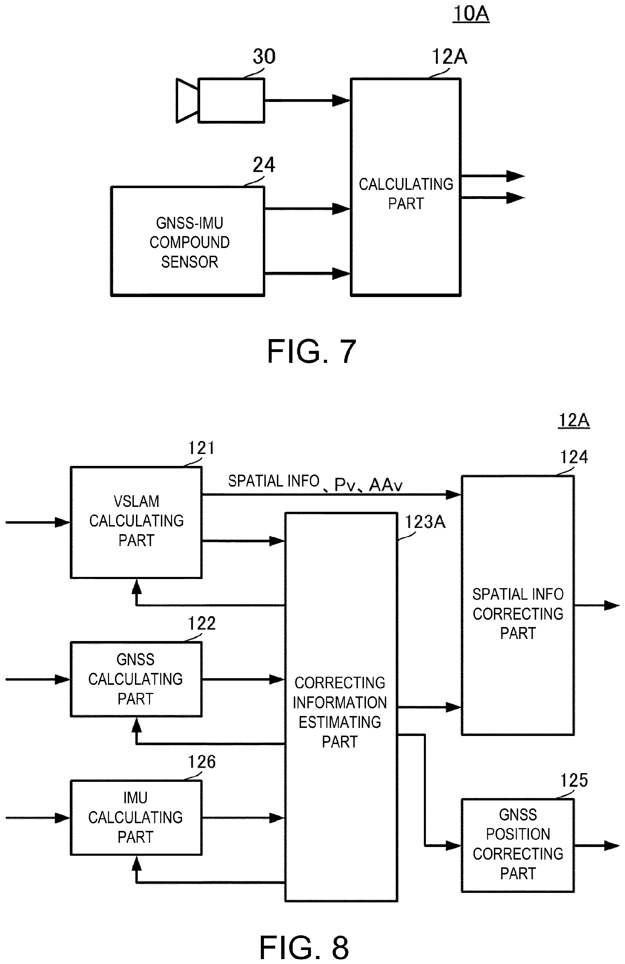

Next, a navigation device according to a second embodiment of the present disclosure is described with reference to the drawings. Fig. 7 is a functional block diagram illustrating a configuration of the navigation device according to the second embodiment of the present disclosure. Fig. 8 is a functional block diagram illustrating a configuration of a calculating part according to the second embodiment of the present disclosure.

As illustrated in Fig. 7 and Fig. 8, the navigation device 10A according to the second embodiment differs from the navigation device 10 according to the first embodiment in that a GNSS-IMU compound sensor 24 is used, and a configuration of the calculating part 12A accompanying the usage of the GNSS-IMU compound sensor 24. Other configurations of the navigation device 10A are similar to those of the navigation device 10, and therefore, description of the similar parts is omitted.

As illustrated in Fig. 7, the navigation device 10A includes a calculating part 12A, the GNSS-IMU compound sensor 24, and the camera 30. The GNSS-IMU compound sensor 24 and the camera 30 are connected to the calculating part 12A.

The GNSS-IMU compound sensor 24 includes, for example, a set of two GNSS antennas and GNSS receivers, and an inertia sensor which implements an acceleration sensor and an angular velocity sensor. The GNSS receiver outputs GNSS observation data containing at least the integrated value of the carrier wave phase. The inertia sensor outputs IMU observation data containing an acceleration (IMU acceleration) and an angular velocity (IMU angular velocity).

The calculating part 12A includes the VSLAM calculating part 121, the GNSS calculating part 122, a correcting information estimating part 123A, the spatial information correcting part 124, the GNSS position correcting part 125, and an IMU calculating part 126.

As described above, the VSLAM calculating part 121 estimates the VSLAM position, the VSLAM attitude angle, and the spatial information. The VSLAM calculating part 121 outputs the VSLAM position and the VSLAM attitude angle to the correcting information estimating part 123A as VSLAM estimation data.

As described above, the GNSS calculating part 122 calculates the GNSS position and the GNSS speed, and outputs them to the correcting information estimating part 123A as GNSS observation data.

The IMU calculating part 126 calculates the IMU attitude angle by using the angular velocity contained in the IMU observation data. The IMU calculating part 126 calculates an IMU speed and an IMU position by using the acceleration contained in the IMU observation data. The IMU calculating part 126 outputs the IMU attitude angle, the IMU speed, and the IMU position to the correcting information estimating part 123A as the IMU observation data (IMU calculation value).

The correcting information estimating part 123A sets up a system equation. State variables of the system equation includes, in addition to the scale error δS and the error δVg of the GNSS speed Vg or the error δPg of the GNSS position Pg, a calculation error of the angular difference between the VSLAM attitude angle and the GNSS attitude angle, a calculation error of the GNSS observation data, and a calculation error of the IMU observation data. Further, the correcting information estimating part 123A sets up an observation equation in which they are the state variables, and the VSLAM estimation data, the GNSS observation data, and the IMU observation data are observation values.

The correcting information estimating part 123A performs Kalman-filter processing by using the system equation and the observation equation. Therefore, the correcting information estimating part 123A estimates the scale error δS, the error δVg of the GNSS speed Vg or the error δPg of the GNSS position Pg, the calculation error of the angular difference between the VSLAM attitude angle and the GNSS attitude angle, the calculation error of the GNSS observation data, and the calculation error of the IMU observation data.

The correcting information estimating part 123A corrects the scale S by using the scale error δS, and outputs the corrected scale S to the spatial information correcting part 124. The spatial information correcting part 124 corrects the spatial information by using the corrected scale S. Note that, although in the description the scale error δS is estimated, the scale S may be estimated instead.

The correcting information estimating part 123A outputs the error δVg of the GNSS speed Vg or the error δPg of the GNSS position Pg to the GNSS position correcting part 125. The GNSS position correcting part 125 corrects the GNSS position Pg by using the error δVg of the GNSS speed Vg or the error δPg of the GNSS position Pg.

The correcting information estimating part 123A feeds back the scale error δS, and the calculation error of the angular difference between the VSLAM attitude angle and the GNSS attitude angle to the VSLAM calculating part 121. The VSLAM calculating part 121 reflects the scale error δS and the calculation error of the angular difference between the VSLAM attitude angle and the GNSS attitude angle (i.e., the estimation error of the VSLAM estimation data), to the estimation of the VSLAM estimation data. This converges the VSLAM estimation data to a highly-precise value.

The correcting information estimating part 123A feeds back the calculation error of the GNSS observation data to the GNSS calculating part 122. The GNSS calculating part 122 reflects the calculation error of the GNSS observation data to the calculation of the GNSS observation data. This converges the GNSS observation data to a highly-precise value.

The correcting information estimating part 123A feeds back the calculation error of the IMU observation data to the IMU calculating part 126. The IMU calculating part 126 reflects the calculation error of the IMU observation data to the calculation of the IMU observation data. This converges the IMU observation data to a highly-precise value.

By using such a configuration and processing, the VSLAM estimation data, the GNSS observation data, and the IMU observation data become highly precise. Therefore, the scale error δS and the error δVg of the GNSS speed Vg or the error δPg of the GNSS position Pg can also be estimated with high precision.

Therefore, the navigation device 10A can correct the spatial information with higher precision, and correct the device position with higher precision. Therefore, the navigation device 10A can calculate with higher precision, the spatial relationship between the device position and each characteristic point of the spatial information (i.e., the navigation support information).

Note that the correcting information estimating part 123A can use the IMU attitude angle and the VSLAM attitude angle AAv to add the error of the angular difference (offset angle) between the VSLAM attitude angle AAv and the IMU attitude angle to the state variable so as to estimate the error of the angular difference.

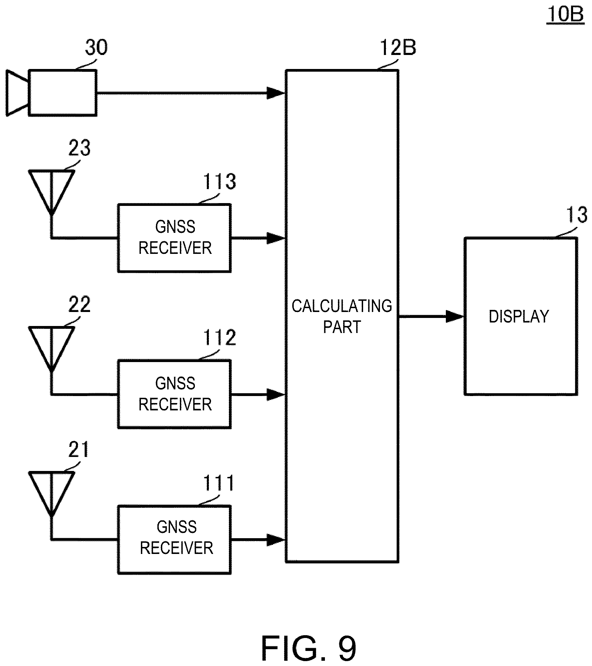

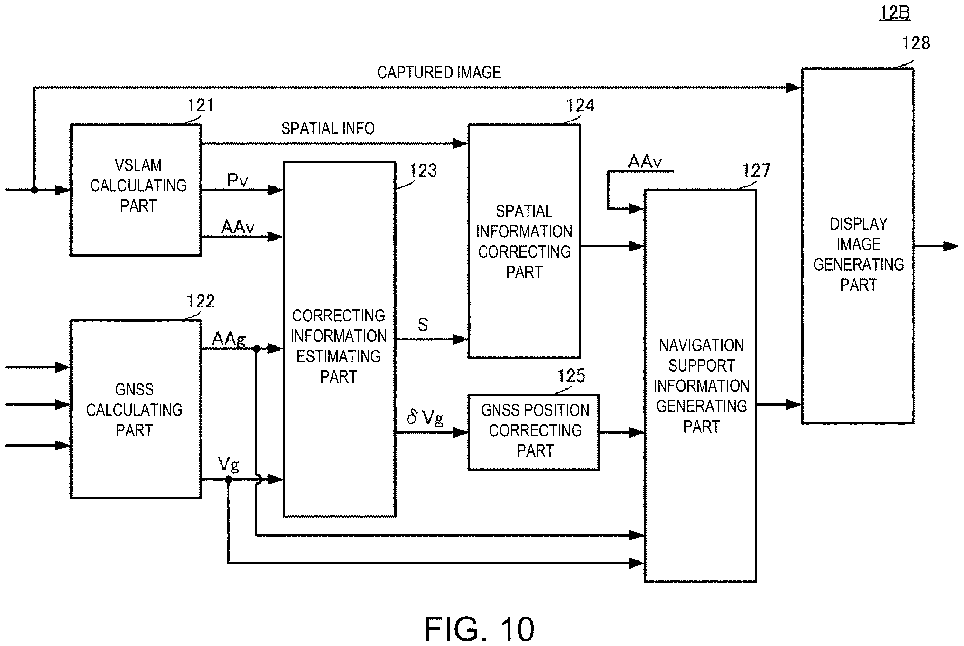

Next, a navigation device according to a third embodiment of the present disclosure is described with reference to the drawings. Fig. 9 is a functional block diagram illustrating a configuration of the navigation device according to the third embodiment of the present disclosure. Fig. 10 is a functional block diagram illustrating a configuration of a calculating part according to the third embodiment of the present disclosure.

As illustrated in Fig. 9, the navigation devices 10B according to the third embodiment differs from the navigation device 10 according to the first embodiment in the configuration and processing of the calculating part 12B, and in that a display 13 is provided. Other configurations of the navigation device 10B are similar to those of the navigation device 10, and therefore, description of the similar parts is omitted.

The display 13 is comprised of a liquid crystal display which is connected to the calculating part 12B.

As illustrated in Fig. 10, the calculating part 12B includes the VSLAM calculating part 121, the GNSS calculating part 122, the correcting information estimating part 123, the spatial information correcting part 124, the GNSS position correcting part 125, a navigation support information generating part 127, and a display image generating part 128. The VSLAM calculating part 121, the GNSS calculating part 122, the correcting information estimating part 123, the spatial information correcting part 124, and the GNSS position correcting part 125 of the calculating part 12B are similar to those of the calculating part 12, and therefore, description thereof is omitted.

The navigation support information generating part 127 generates the navigation support information by using the spatial information corrected by the scale S, and the GNSS position, the GNSS speed, and the GNSS attitude angle which are corrected by the error δVg or the error δPg. The navigation support information includes a horizontal grid and an estimated route.

The navigation support information generating part 127 sets up the horizontal surface using the VSLAM attitude angle and the GNSS attitude angle. In more detail, the navigation support information generating part 127 calculates an angular difference (offset angle) between the VSLAM attitude angle and the GNSS attitude angle. The navigation support information generating part 127 sets up a correction angle so as to cancel out the angular difference. The navigation support information generating part 127 rotates the horizontal surface set up in the GNSS coordinate system by the correction angle to set up the horizontal surface in the VSLAM coordinate system (a horizontal surface in the captured image). That is, the navigation support information generating part 127 sets up the horizontal surface in the VSLAM coordinate system by correcting the attitude angle of the horizontal surface by the correction angle.

The navigation support information generating part 127 further sets up the horizontal grid on the basis of the horizontal surface. The horizontal grid can be expressed by line segment(s) parallel to the horizontal surface. Here, the navigation support information generating part 127 can set up, in the captured image, the horizontal grid at spacing corresponding to the actual size of the imaged space by using the scale S described above. Since the scale S is corrected with high precision as described above, the navigation support information generating part 127 can generate in the captured image the horizontal grid which correctly corresponds to the actual size of the imaged space.

Moreover, the navigation support information generating part 127 calculates the estimated route by using a known method, based on the GNSS position, the GNSS speed, and the GNSS attitude angle which are corrected. The navigation support information generating part 127 rotates the estimated route by the correction angle described above to convert it into a route in the VSLAM coordinate system. Therefore, the navigation support information generating part 127 can dispose the estimated route on the horizontal surface with high precision. Moreover, by using this configuration and processing, it can dispose the estimated route on the horizontal surface with high precision, even if the ship 900 oscillates.

Moreover, since the angular difference is corrected and the scale S is highly precise, the spatial relationship between the horizontal grid and the estimated route can be displayed with high precision.

The navigation support information generating part 127 outputs the horizontal grid, the estimated route, and the coordinates of the characteristic point(s) contained in the spatial information to the display image generating part 128 as the navigation support information.

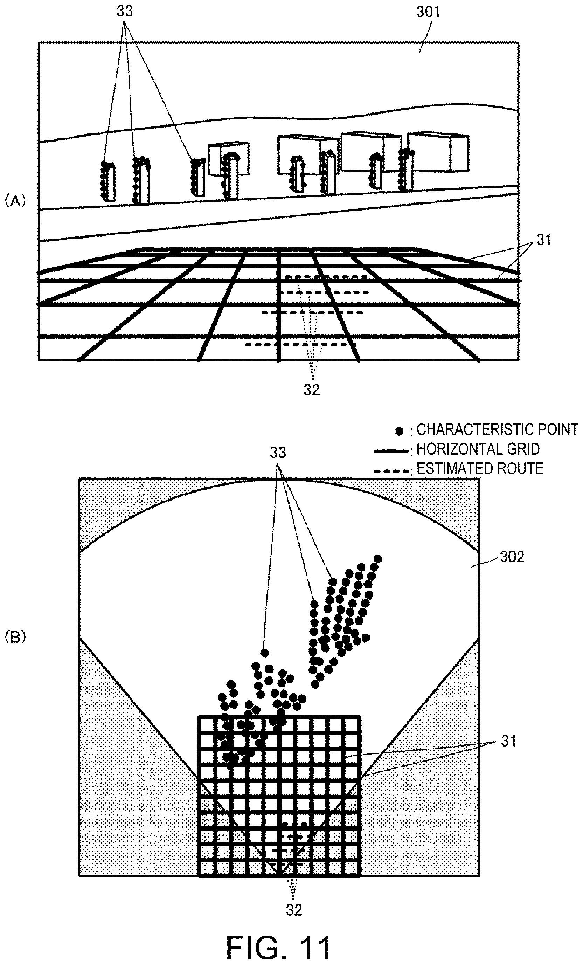

The display image generating part 128 generates a navigation support image as illustrated in Fig. 11(A) or 11(B) by using the navigation support information and the captured image, and outputs it to the display 13. The display 13 displays the navigation support image.

Figs. 11(A) and 11(B) are views illustrating examples of the navigation support image displayed in the navigation device according to the third embodiment. In Figs. 11(A) and 11(B), solid lines indicate the horizontal grids, broken lines indicate the estimated route, and "●" indicates the characteristic point.

Fig. 11(A) is the navigation support image in which the horizontal grids, the estimated route, and the characteristic points are superimposed on the captured image. As described above, in the navigation device 10B, the horizontal surface is set up correctly, the horizontal grids are set up with high precision corresponding to the scale of the captured image, and the angular difference (offset angle) between the estimated route and the horizontal surface is corrected. Therefore, in the case of the navigation support image as illustrated in Fig. 11(A), horizontal grids 31, estimated route 32, and characteristic points 33 are correctly superimposed on a captured image 301.

Fig. 11(B) is a navigation support image using an ortho image on the basis of the horizontal surface based on the captured image. As described above, in the navigation device 10B, the horizontal surface is set up correctly, the horizontal grids are set up with high precision corresponding to the scale of the captured image, and the angular difference (offset angle) between the estimated route and the horizontal surface is corrected. Therefore, in the case of the navigation support image as illustrated in Fig. 11(B), the horizontal surface used as a reference of the ortho image is set up correctly, and the horizontal grid 31, the estimated route 32, and the characteristic point 33 are correctly superimposed on an ortho image 302.

Thus, by using the configuration and processing of this embodiment, the navigation device 10B can provide the exact navigation support information to an operator of the ship 900.

Note that a window may be set up in a part of the navigation support image of Fig. 11(A), and the ortho image illustrated in Fig. 11(B) may be inserted into the window. Therefore, the navigation device 10B can provide, with one screen, the navigation support information, which is a variety of exact information, to the operator of the ship 900.

Note that, in the above description, the estimated horizontal surface is corrected using the angular difference (offset angle) between the VSLAM attitude angle AAv and the GNSS attitude angle AAg. However, the angular difference may be omitted. In this case, for example, when the ship 900 is hardly shaken (in a state of still water), the estimated route can be disposed on the horizontal surface with high precision.

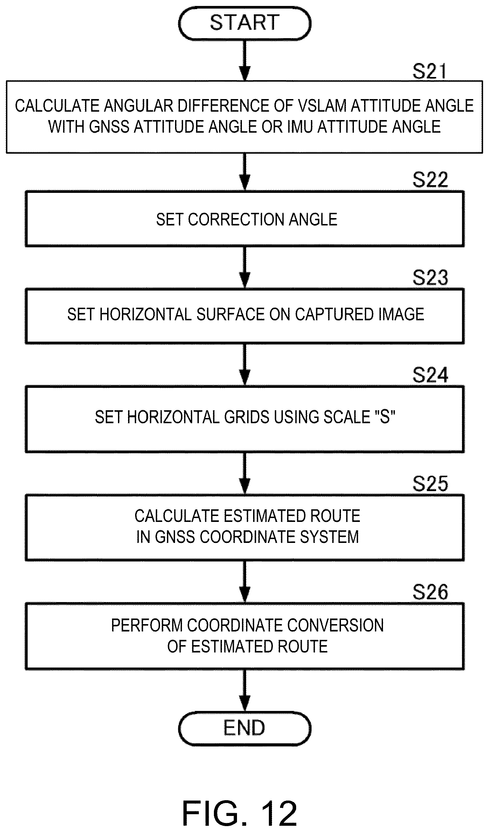

Although in the above description the calculating part 12B is implemented by being divided into the plurality of functional blocks, it may be implemented only a program which implements the processing illustrated in Fig. 12 and a processing unit which executes the program. Fig. 12 is a flowchart illustrating a process flow of the method of generating the navigation support information. Note that, since the concrete content of each processing is described above, description thereof is omitted.

The processing unit calculates the angular difference (offset angle) of the VSLAM attitude angle with the GNSS attitude angle or the IMU attitude angle which is calculated by the method described above (S21). The processing unit sets up the correction angle which cancels out the angular difference (S22).

The processing unit sets up the horizontal surface on the captured image (the horizontal surface in the VSLAM coordinate system) by using the correction angle (S23).

The processing unit sets up the horizontal grids by using the scale S calculated and corrected as described above (S24).

The processing unit calculates the estimated route in the GNSS coordinate system (S25). In detail, it calculates the estimated route by the known method based on the GNSS speed and the GNSS attitude angle.

The processing unit performs a coordinate conversion of the estimated route by using the correction angle (S26).

The processing unit generates the navigation support information containing the horizontal grids, the estimated route, and the characteristic points, and generates the display image by using the navigation support information and the captured image.

Note that, although in the above description a head-up indication in which a direction straightly extending from the bow is used as a center direction is performed, an indication in a navigation coordinate system on the basis of north, south, east, and west. In this case, a coordinate conversion of the horizontal grids, the estimated route, and the characteristic points may be performed using the GNSS observation value, such as the GNSS attitude angle.

Moreover, when initialization of the VSLAM calculation has not been finished, and the number of characteristic points is too small (the spatial information is too few), the horizontal surface may be detected by using a homography conversion which uses the height of the camera 30 and the GNSS attitude angle. In this case, after the initialization of the VSLAM calculation, the horizontal surface is detected by using the spatial information, as described above.

Moreover, for example, the horizontal surface may be set up using the characteristic points contained in the spatial information, and known information on the horizontal surface associated with the characteristic points, or may be set up using output data from other sensors, such as a stereoscopic camera, a radar, a laser scanner, and a motion sensor.

Moreover, in the above description, the configuration of the navigation device 10 according to the first embodiment is used for a part of the navigation device 10B according to the third embodiment. However, the configuration of the navigation device 10A according to the second embodiment may be used for a part of the navigation device 10B according to the third embodiment. In this case, since the GNSS speed and the IMU attitude angle are calculated more precisely, the estimated route can be disposed on the horizontal surface more precisely, and the spatial relationship between the horizontal grid and the estimated route becomes more precise.

### DESCRIPTION OF REFERENCE CHARACTERS

10, 10A, 10B: Navigation Device
12, 12A, 12B: Calculating Part
13: Display
21, 22, 23: GNSS Antenna
24: GNSS-IMU Compound Sensor
30: Camera
31: Horizontal Grid
32: Estimated Route
33: Characteristic Point
90: Reference Point
91: Device
111, 112, 113: GNSS Receiver
121: VSLAM Calculating Part
122: GNSS Calculating Part
123, 123A: Correcting Information Estimating Part
124: Spatial Information Correcting Part
125: GNSS Position Correcting Part
126: IMU Calculating Part
127: Navigation Support Information Generating Part
128: Display Image Generating Part
301: Captured Image
302: Ortho Image
900: Ship
910, 910v: Quaywall
911, 911v, 912, 921, 921v: Characteristic Point
920, 920v: Building
1221: GNSS Speed Calculating Part
1222: GNSS Attitude Angle Calculating Part
1231: Rotation Matrix Calculating Part
1232: Estimation Calculating Part
AAg: GNSS Attitude Angle
AAv: VSLAM Attitude Angle
C: Rotation Matrix
Dgij: GNSS Distance
Dvij: VSLAM Distance
Pg, Pgc, Pgj, Pgjc: GNSS Position
Po: Coordinates
Pv: VSLAM Position
S: Scale
Ve911c, Ve911v, Ve921c, Ve921v: Spatial Vector
Vg: GNSS Speed
Vgc: Speed

### TERMINOLOGY

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes one or more computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the embodiment, certain acts, events, or functions of any of the algorithms described herein can be performed in a different sequence, can be added, merged, or left out altogether (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. In addition, different tasks or processes can be performed by different machines and/or computing systems that can function together.

The various illustrative logical blocks and modules described in connection with the embodiments disclosed herein can be implemented or performed by a machine, such as a processor. A processor can be a microprocessor, but in the alternative, the processor can be a controller, microcontroller, or state machine, combinations of the same, or the like. A processor can include electrical circuitry configured to process computer-executable instructions. In another embodiment, a processor includes an application specific integrated circuit (ASIC), a field programmable gate array (FPGA) or other programmable device that performs logic operations without processing computer-executable instructions. A processor can also be implemented as a combination of computing devices, e.g., a combination of a digital signal processor (DSP) and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Conditional language such as, among others, "can," "could," "might" or "may," unless specifically stated otherwise, are otherwise understood within the context as used in general to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding whether these features, elements and/or steps are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Any process descriptions, elements or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C. The same holds true for the use of definite articles used to introduce embodiment recitations. In addition, even if a specific number of an introduced embodiment recitation is explicitly recited, those skilled in the art will recognize that such recitation should typically be interpreted to mean at least the recited number (e.g., the bare recitation of "two recitations," without other modifiers, typically means at least two recitations, or two or more recitations).

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.).

For expository purposes, the term "horizontal" as used herein is defined as a plane parallel to the plane or surface of the floor of the area in which the system being described is used or the method being described is performed, regardless of its orientation. The term "floor" can be interchanged with the term "ground" or "water surface." The term "vertical" refers to a direction perpendicular to the horizontal as just defined. Terms such as "above," "below," "bottom," "top," "side," "higher," "lower," "upper," "over," and "under," are defined with respect to the horizontal plane.

As used herein, the terms "attached," "connected," "mated" and other such relational terms should be construed, unless otherwise noted, to include removable, moveable, fixed, adjustable, and/or releasable connections or attachments. The connections/attachments can include direct connections and/or connections having intermediate structure between the two components discussed.

Numbers preceded by a term such as "approximately," "about," and "substantially" as used herein include the recited numbers, and also represent an amount close to the stated amount that still performs a desired function or achieves a desired result. For example, the terms "approximately," "about," and "substantially" may refer to an amount that is within less than 10% of the stated amount. Features of embodiments disclosed herein preceded by a term such as "approximately," "about," and "substantially" as used herein represent the feature with some variability that still performs a desired function or achieves a desired result for that feature.

It should be emphasized that many variations and modifications may be made to the above-described embodiments, the elements of which are to be understood as being among other acceptable examples. All such modifications and variations are intended to be included herein within the scope of this disclosure and protected by the following claims.

## Claims

1. A navigation device, comprising:
a GNSS calculating part configured to calculate a GNSS speed and a GNSS attitude angle based on one of an amount of change in a phase of a GNSS signal transmitted from a positioning satellite and an amount of change in a frequency of the GNSS signal;
a VSLAM calculating part configured to perform a VSLAM calculation by using a video to estimate VSLAM positions and VSLAM attitude angles at a plurality of time points; and
a correcting information estimating part configured to estimate, based on the GNSS speed, the GNSS attitude angle, the VSLAM positions at the plurality of time points, and the VSLAM attitude angles at the plurality of time points, one of a scale and a scale error of the VSLAM position with respect to a position in an absolute coordinate system, or one of an error of the GNSS speed and an error of the GNSS position obtained from the GNSS speed.

2. A navigation device, comprising:
a GNSS calculating part configured to calculate a GNSS calculation value containing one of a GNSS speed and a GNSS position based on one of an amount of change in a phase of a GNSS signal transmitted from a positioning satellite and an amount of change in a frequency of the GNSS signal;
an IMU calculating part configured to calculate an IMU calculation value containing one of an IMU attitude angle and an IMU speed based on an observation data of an inertia sensor;
a VSLAM calculating part configured to perform a VSLAM calculation by using a video to estimate VSLAM positions and VSLAM attitude angles at a plurality of time points; and
a correcting information estimating part configured to estimate, based on the GNSS calculation value, the IMU calculation value, the VSLAM position, and the VSLAM attitude angle, one of a scale and a scale error of the VSLAM position with respect to a position in an absolute coordinate system, an estimation error of the VSLAM attitude angle, one of an error of the GNSS speed and an error of the GNSS position obtained from the GNSS speed, an error of the GNSS calculation value, or an error of the IMU calculation value.

3. The navigation device of claim 2, wherein the correcting information estimating part is adapted to:
feed back the scale or the scale error and the estimation error of the VSLAM attitude angle to the VSLAM calculating part;
feed back the error of the GNSS calculation value to the GNSS calculating part; and
feed back the error of the IMU calculation value to the IMU calculating part.

4. The navigation device of any one of claims 1 to 3, comprising a spatial information correcting part configured to correct the spatial information estimated by the VSLAM calculating part based on the scale or a scale corrected by the scale error.

5. The navigation device of any one of claims 1 to 4, comprising a GNSS position correcting part configured to correct the GNSS position of the device based on an error of the GNSS speed or an error of the GNSS position obtained from the GNSS speed.

6. The navigation device of any one of claims 1 to 5, wherein the correcting information estimating part estimates a calculation error of an offset angle of the VSLAM attitude angle.

7. The navigation device of claim 6, comprising a navigation support information generating part configured to detect a horizontal surface of the video based on the offset angle.

8. The navigation device of claim 7, wherein the navigation support information generating part generates navigation support information containing a horizontal grid parallel to the horizontal surface based on the scale or a scale corrected by the scale error.

9. The navigation device of claim 8, wherein the navigation support information generating part calculates an estimated route based on the GNSS position and the GNSS speed, the navigation support information including the estimated route to which a coordinate conversion based on the offset angle is applied.

10. The navigation device of claim 8 or 9, comprising a display image generating part configured to generate a display image based on the video and the navigation support information.

11. A method of generating navigation support information, comprising the steps of:
calculating a GNSS speed and a GNSS attitude angle based on one of an amount of change in a phase of a GNSS signal transmitted from a positioning satellite and an amount of change in a frequency of the GNSS signal;
performing a VSLAM calculation by using a video to estimate VSLAM positions and VSLAM attitude angles at a plurality of time points; and
estimating, based on the GNSS speed, the GNSS attitude angle, the VSLAM positions at the plurality of time points, and the VSLAM attitude angles at the plurality of time points, one of a scale and a scale error of the VSLAM position with respect to a position in an absolute coordinate system, or one of an error of the GNSS speed and an error of the GNSS position obtained from the GNSS speed.

12. A method of generating navigation support information, comprising the steps of:
calculating a GNSS calculation value containing one of a GNSS speed and a GNSS position, based on one of an amount of change in a phase of a GNSS signal transmitted from a positioning satellite and an amount of change in a frequency of the GNSS signal;
calculating an IMU calculation value containing one of an IMU attitude angle and an IMU angular velocity based on an observation data of an inertia sensor;
performing a VSLAM calculation by using a video to estimate VSLAM positions and VSLAM attitude angles at a plurality of time points; and
estimating, based on the GNSS calculation value, the IMU calculation value, the VSLAM position, and the VSLAM attitude angle, one of a scale and a scale error of the VSLAM position with respect to a position in an absolute coordinate system, an estimation error of the VSLAM attitude angle, one of an error of the GNSS speed and an error of the GNSS position obtained from the GNSS speed, an error of the GNSS calculation value, or an error of the IMU calculation value.

13. The method of claim 10 or 11, comprising the steps of:
estimating a calculation error of an offset angle of the VSLAM attitude angle; and
detecting a horizontal surface of the video based on the offset angle.

14. The method of claim 13, comprising the step of generating navigation support information containing a horizontal grid parallel to the horizontal surface based on the scale or a scale corrected by the scale error.

15. The method of claim 14, comprising the step of calculating an estimated route based on the GNSS position and the GNSS speed, the navigation support information including the estimated route to which a coordinate conversion based on the offset angle is applied.

16. A generation program of navigation support information, configured to cause a processing unit to perform processing, the processing comprising:
calculating a GNSS speed and a GNSS attitude angle based on one of an amount of change in a phase of a GNSS signal transmitted from a positioning satellite and an amount of change in a frequency of the GNSS signal;
performing a VSLAM calculation by using a video to estimate VSLAM positions and VSLAM attitude angles at a plurality of time points; and
estimating, based on the GNSS speed, the GNSS attitude angle, the VSLAM positions at the plurality of time points, and the VSLAM attitude angles at the plurality of time points, one of a scale and a scale error of the VSLAM position with respect to a position in an absolute coordinate system, or one of an error of the GNSS speed and an error of the GNSS position obtained from the GNSS speed.

17. A generation program of navigation support information, configured to cause a processing unit to perform processing, the processing comprising:
calculating a GNSS calculation value containing one of a GNSS speed and a GNSS position based on one of an amount of change in a phase of a GNSS signal transmitted from a positioning satellite and an amount of change in a frequency of the GNSS signal;
calculating an IMU calculation value containing one of an IMU attitude angle and an IMU angular velocity based on an observation data of an inertia sensor;
performing a VSLAM calculation by using a video to estimate VSLAM positions and VSLAM attitude angles at a plurality of time points; and
estimating, based on the GNSS calculation value, the IMU calculation value, the VSLAM position, and the VSLAM attitude angle, one of a scale and a scale error of the VSLAM position with respect to a position in an absolute coordinate system, an estimation error of the VSLAM attitude angle, one of an error of the GNSS speed and an error of the GNSS position obtained from the GNSS speed, an error of the GNSS calculation value, or an error of the IMU calculation value.

18. The program of claim 16 or 17, the processing comprising:
estimating a calculation error of an offset angle of the VSLAM attitude angle; and
detecting a horizontal surface of the video based on the offset angle.

19. The program of claim 18, the processing comprising generating navigation support information containing a horizontal grid parallel to the horizontal surface using the scale or a scale corrected by the scale error.

20. The program of claim 19, the processing comprising calculating an estimated route based on the GNSS position and the GNSS speed, the navigation support information including the estimated route to which a coordinate conversion based on the offset angle is applied.
